# EUROPÄISCHE PATENTSCHRIFT

(11) **EP 1 711 712 B1**
(45) Veröffentlichungstag und Bekanntmachung des Hinweises auf die Patenterteilung: **22.10.2008**
(21) Anmeldenummer: 05707109.4
(22) Anmeldetag: 01.02.2005
(51) Int. Cl.: F15B 1/00

(54) **DIFFERENZDRUCK-PROPORTIONALVENTIL**
DIFFERENTIAL PRESSURE PROPORTIONAL VALVE
SOUPAPE PROPORTIONNELLE A PRESSION DIFFERENTIELLE

(30) Priorität: 04.02.2004 DE 102004005315
(43) Veröffentlichungstag der Anmeldung: 18.10.2006
(73) Patentinhaber: FESTO AG & Co. KG, 73734 Esslingen (DE)
(72) Erfinder: FRISCH, Herbert, A-3542 Gföhl (AT)
(74) Vertreter: Abel, Martin
(86) Internationale Anmeldenummer: PCT/EP2005/000963
(87) Internationale Veröffentlichungsnummer: WO 2005/075832

(56) Entgegenhaltungen:
- DE-A1- 4 129 755
- DE-U1- 20 106 018
- GB-A- 553 298
- US-A- 3 794 075
- US-A- 4 111 230
- US-A- 4 193 423
- US-A- 4 754 776

## Beschreibung

Die Erfindung betrifft ein Differenzdruck-Proportionalventil, mit einem eine Speiseöffnung, eine Entlastungsöffnung und zwei Arbeitsöffnungen aufweisenden Ventilgehäuse sowie mit einer Stellvorrichtung zur Einstellung einer gewünschten Druckdifferenz zwischen den an den beiden Arbeitsöffnungen herrschenden Arbeitsdrücken, wobei die Stellvorrichtung ein bewegliches Steuerglied aufweist, das stellungsabhängig in der Lage ist, die beiden Arbeitsöffnungen jeweils mit entweder der Speiseöffnung oder der Entlastungsöffnung zu verbinden, wobei dem Steuerglied die an den beiden Arbeitsöffnungen herrschenden Arbeitsdrücke aufgeschaltet sind, mit Betätigungsmitteln, durch die dem Steuerglied in einer ersten Stellrichtung eine der gewünschten Druckdifferenz entsprechende Vorgabe-Stellkraft auferlegbar ist, und mit Federmitteln, die das Steuerglied im Betrieb des Ventils ständig derart in einer der ersten Stellrichtung entgegengesetzten zweiten Stellrichtung mit einer Federkraft beaufschlagen, dass bei minimaler Vorgabe-Stellkraft an der einen Arbeitsöffnung ein maximaler und an der anderen Arbeitsöffnung ein minimaler Arbeitsdruck ansteht, wobei das Steuerglied ein entsprechend den an ihm angreifenden Kräfteverhältnissen in der einen oder anderen Stellrichtung relativ zum Ventilgehäuse bewegbares Antriebsorgan aufweist, auf das zum einen die Vorgabe-Stellkraft und die Federkraft und zum anderen aus den beiden Arbeitsdrücken resultierende erste und zweite Arbeitsdruckkräfte, jeweils einander entgegengesetzt, einwirken.

Ein Differenzdruck-Proportionalventil, das beispielsweise aus der DE 20119470 U1 hervorgeht, ermöglicht mit geringem ventiltechnischen Aufwand die Bereitstellung einer Druckdifferenz. Bei durch Fluidkraft betätigbaren Antrieben hängt die Beschleunigung des Abtriebsteils maßgeblich von der an ihm anstehenden Druckdifferenz ab. Je größer diese Druckdifferenz ist, desto höher ist in der Regel auch die Beschleunigung. Gegenüber einem paarweisen Einsatz von Druckregelventilen, wie sie beispielsweise in der DE 19504364 C2 beschrieben werden, ermöglicht das gattungsgemäße Differenzdruck-Proportionalventil die Bereitstellung der gewünschten Druckdifferenz unter Verwendung lediglich eines einzigen Ventils.

Das bekannte Proportionalventil besitzt ein bewegliches Steuerglied, das in der Lage ist, jede der beiden Arbeitsöffnungen wahlweise mit der Speiseöffnung oder mit der Entlastungsöffnung zu verbinden, wobei die Aufschaltung der Arbeitsdrücke zur Folge hat, dass an dem Steuerglied fluidische Stellkräfte angreifen, die für die momentan eingenommene Steuerposition mitverantwortlich sind. Das Steuerglied hat die Tendenz, eine Steuerposition einzunehmen, in der die an ihm angreifenden Stellkräfte im Gleichgewicht sind. Diese Steuerposition entspricht einer bestimmten Druckdifferenz zwischen den an den beiden Arbeitsöffnungen abgreifbaren Arbeitsdrücken. Durch zusätzliches Aufbringen einer gewissen Vorgabe-Stellkraft kann das Kräftegleichgewicht vorübergehend gestört werden, sodass sich das Steuerglied verlagert und eine Fluidströmung zulässt, die eine Änderung der Druckdifferenz zwischen den beiden Arbeitsöffnungen hervorruft, bis erneut ein Gleichgewicht der Stellkräfte vorhanden ist. Man hat somit die Möglichkeit, durch Aufbringung einer entsprechenden Vorgabe-Stellkraft die Druckdifferenz auf ein gewünschtes Maß einzustellen, wobei diese Druckdifferenz dann ungeachtet der absoluten Druckhöhe und eventueller Druckschwankungen konstant eingeregelt wird.

Allerdings bedarf es zum Hervorrufen der gewünschten Vorgabe-Stellkraft der Bereitstellung zweier Steuersignale. Liegt kein Steuersignal an, was einer minimalen Vorgabe-Stellkraft entspricht, liegt die Druckdifferenz bei null. Um nun eine Druckdifferenz zugunsten der einen oder anderen Arbeitsöffnung hervorzurufen, bedarf es einer Auslenkung des Steuergliedes ausgehend von der Neutralstellung in entweder die eine oder die andere Richtung, sodass durch entsprechende Steuersignale eine Beaufschlagung des Steuergliedes in der einen oder anderen Richtung hervorgerufen werden muss.

Die DE 79 24 113 U1 befasst sich mit einem 5/2-Steuerventil mit zwei möglichen Schaltstellungen, um die vorhandenen fünf Öffnungen in bestimmten Mustern miteinander zu verbinden oder voneinander abzutrennen. Gleiches gilt für das in der DE 40 32 991 A1 beschriebene 5/2-Wegeventil, wobei zudem noch der alternative Einsatz einer pneumatischen Feder anstelle einer mechanischen Feder für die Erzeugung der Rückstellkraft beschrieben wird.

Die US 4,193,423 beschreibt ein Mehrwegeventil, bei dem die Merkmale des Oberbegriffes des Patentanspruchs 1 verwirklicht sind. Es enthält ein Steuerventil, das durch Federmittel in eine Grundstellung vorgespannt ist, aus der es durch Betätigung eines Vorsteuerventils in eine zweite Schaltstellung umschaltbar ist. Auf diese Weise können zwei Arbeitsöffnungen abwechselnd mit einem Speisekanal oder einem Entlüftungskanal verbunden werden. Ein vergleichbar aufgebautes Mehrwegeventil ist auch aus der US 3,794,075 bekannt.

Aus der DE 201 06 018 U1 geht ein Mehrwegeventil hervor, dessen Steuerglied als Ventilschieber ausgebildet ist, der in beiden Richtungen durch ein Fluid beaufschlagbar ist, um ihn in unterschiedlichen Schaltstellungen zu positionieren.

Es ist die Aufgabe der vorliegenden Erfindung, ein Differenzdruck-Proportionalventil der eingangs genannten Art so weiterzubilden, dass es auf einfachere Weise ansteuerbar ist.

Diese Aufgabe wird dadurch gelöst, dass das Steuerglied zwei unabhängig voneinander relativ zum Antriebsorgan und zum Ventilgehäuse in den beiden Stellrichtungen bewegbare, jeweils einer der Arbeitsöffnungen zugeordnete Verschlusselemente enthält, die jeweils zwei Verschlussabschnitte aufweisen, von denen der erste Verschlussabschnitt durch Zusammenwirken mit einem am Ventilgehäuse vorgesehenen ersten Gegenabschnitt die Fluidströmung zwischen der zugeordneten Arbeitsöffnung und der Speiseöffnung und der zweite Verschlussabschnitt durch Zusammenwirken mit einem am Antriebsorgan vorgesehenen zweiten Gegenabschnitt die Fluidströmung zwischen der zugeordneten Arbeitsöffnung und der Entlastungsöffnung steuert, wobei die Verschlusselemente federnd in einander entgegengesetzte Stellrichtungen vorgespannt sind und wobei der Stellweg der Verschlusselemente durch das Erreichen der die Verbindung zwischen einer Arbeitsöffnung und der Speiseöffnung unterbrechenden Schließstellung bezüglich des Ventilgehäuses begrenzt ist.

Auf diese Weise liegt ein Differenzdruck-Proportionalventil vor, das in der bei minimaler Vorgabe-Stellkraft gegebenen Neutralstellung die maximale Druckdifferenz zugunsten einer der beiden Arbeitsöffnungen vorgibt. Ausgehend hiervon kann durch Erhöhen der Vorgabe-Stellkraft und mithin durch ein einziges Steuersignal die Druckdifferenz so variiert werden, dass die Druckdifferenz zunächst bis auf null abfällt, um anschließend zugunsten der anderen Arbeitsöffnung bis zum neuerlichen Erreichen des Maximalwertes, nun aber mit anderem Vorzeichen, anzusteigen. Ein derart ausgebildetes Differenzdruck-Proportionalventil lässt sich relativ einfach ansteuern und erleichtert die Integration in Anlagen, die einen geregelten Betrieb voraussetzen. Die gewünschte Vorgabe-Stellkraft lässt sich relativ einfach bereitstellen, beispielsweise - bei fluidischer Ansteuerung - durch zwei 2/2-Wege-Vorsteuerventile, ein Düse-Prallplatte-System oder ein 3/3-Wege-Piezoventil. Interessante Anwendungsbereiche für das Differenzdruck-Proportionalventil sind beispielsweise Stellungsregler in der Prozessindustrie. Auch für einfache Positionieraufgaben mit sanftem Abbremsvorgang kann das Differenzdruck-Proportionalventil vorteilhaft eingesetzt werden.

Zugunsten einer besonders kompakten und zugleich funktionssicheren Ausführungsform verfügt das Steuerglied der Stellvorrichtung über ein Antriebsorgan, auf das zum einen die Vorgabe-Stellkraft und die Federkraft und zum anderen aus den beiden Arbeitsdrücken resultierende erste und zweite Arbeitsdruckkräfte, jeweils einander entgegengesetzt, einwirken, wobei das Antriebsorgan entsprechend den an ihm angreifenden Kräfteverhältnissen in der einen oder anderen Stellrichtung relativ zum Ventilgehäuse verlagerbar ist. Die eigentliche Steuerung der Fluidströme übernehmen zwei unabhängig voneinander relativ zum Antriebsorgan und zum Ventilgehäuse in den beiden Stellrichtungen bewegbare Verschlusselemente, von denen je eines einer der beiden Arbeitsöffnungen zugeordnet ist. Die Verschlusselemente besitzen jeweils zwei Verschlussabschnitte, von denen der erste Verschlussabschnitt mit jeweils einem am Ventilgehäuse vorgesehenen ersten Gegenabschnitt und der zweite Verschlussabschnitt mit einem am Antriebsorgan jeweils vorgesehenen zweiten Gegenabschnitt kooperiert, um entsprechend der eingenommenen Stellung eine Fluidströmung zwischen einer jeweiligen Arbeitsöffnung und der Steueröffnung oder der Entlastungsöffnung mehr oder weniger weit freizugeben oder zu unterbinden. Die Verschlusselemente sind dabei federnd in einander entgegengesetzte Stellrichtungen vorgespannt und werden in ihrer Stellbewegung durch das Erreichen der die Verbindung zwischen einer Arbeitsöffnung und der Entlastungsöffnung unterbrechenden Schließstellung bezüglich des Ventilgehäuses begrenzt.

Vorteilhafte Weiterbildungen der Erfindung gehen aus den Unteransprüchen hervor.

Bei einer besonders einfachen und verschleißarmen Bauform sind die Federmittel von einer Fluidfeder, insbesondere von einer Luftfeder, gebildet. Die erforderliche Druckluft wird zweckmäßigerweise von dem der Speiseöffnung zugeführten Fluid abgezapft. Der für das Hervorrufen der Federkraft verantwortliche Federdruck kann auf diese Weise dem Speisedruck entsprechen, der von dem Proportionalventil gesteuert wird.

Grundsätzlich besteht allerdings auch die Möglichkeit, auf eine mechanische Federeinrichtung als Federmittel zurückzugreifen, insbesondere auf eine Druckfedereinrichtung. Wie im Falle einer Fluidfeder legt auch eine mechanische Federeinrichtung den maximal möglichen Druck an der einen Arbeitsöffnung fest.

Um auf die Arbeitsdrücke Einfluss zu nehmen, können Einstellmittel vorgesehen sein, die eine variable Einstellung der Federkraft der Federmittel ermöglichen.

Die jeweils paarweise miteinander zusammenwirkenden Verschlussabschnitte und Gegenabschnitte sind zweckmäßigerweise nach Art von Sitzventilmitteln ausgestaltet. Um hier Überbestimmungen zu vermeiden und einen Toleranzausgleich zu schaffen, ist es von Vorteil, wenn von den zusammenwirkenden Abschnitten wenigstens einer als in der Stellrichtung flexible Dichtlippe ausgebildet ist, die nachgeben kann.

Die für die Einstellung der Druckdifferenz an der Stellvorrichtung vorgesehenen, zur Beaufschlagung mit Fluid dienenden Flächen können beispielsweise als Kolbenflächen ausgeführt sein oder aber an für eine geringere Reibung sorgenden Membranflächen.

Nachfolgend wird die Erfindung anhand der beiliegenden Zeichnung näher erläutert. In dieser zeigen:
- Fig. 1: eine bevorzugte erste Bauform des erfindungsgemäßen Differenzdruck-Proportionalventils im Längsschnitt und im komplett drucklosen Zustand,
- Fig. 2: den mit dem.beispielsgemäßen Proportionalventil erzielbaren Differenzdruckverlauf,
- Fig. 3 bis 10: verschiedene Betriebszustände des Differenzdruck-Proportionalventils der Fig. 1, wobei die jeweils herrschenden Druck- und Kräfteverhältnisse angegeben sind,
- Fig. 11 und 12: zwei alternative Bauformen des Differenzdruck-Proportionalventils, bei denen mögliche Maßnahmen für den Toleranzausgleich in den abzudichtenden Bereichen illustriert sind,
- Fig. 13: eine modifizierte Bauform des Proportionalventils gemäß Fig. 1 bis 10, wobei die zur Fluidbeaufschlagung vorgesehenen Flächen als Kolbenflächen ausgeführt sind,
- Fig. 14: eine modifizierte Bauform des Proportionalventils, wobei zur Erzeugung der Federkraft auf mechanische Federmittel zurückgegriffen wird, und
- Fig. 15: eine abgewandelte Ventilbauform, bei der eine einfache Einstellung der an den Arbeitsöffnungen herrschenden Arbeitsdrücke möglich ist.

Das im Folgenden aus Vereinfachungsgründen lediglich als Proportionalventil bezeichnete Differenzdruck-Proportionalventil 1 besitzt ein Ventilgehäuse 2 mit einer Mehrzahl von den Durchtritt eines Fluides gestattenden Öffnungen in Gestalt einer Speiseöffnung P, einer Entlastungsöffnung R sowie einer ersten und einer zweiten Arbeitsöffnung A, B.

Die Speiseöffnung P ist an eine nicht näher dargestellte Druckquelle anschließbar. Über diese wird unter einem Speisedruck p_{P} stehendes Arbeitsfluid hydraulischer oder, wie beim Ausführungsbeispiel, gasförmiger Art eingespeist. Bevorzugt wird Druckluft als Arbeitsfluid verwendet.

Die Entlastungsöffnung R führt zu einer Drucksenke. Bei hydraulischem Arbeitsfluid besteht diese aus einem unter atmosphärischem Druck stehenden Tank. Im Falle der beispielsgemäßen Betriebsweise mit Druckluft ist die Drucksenke von der Atmosphäre gebildet. Die Entlastungsöffnung kann daher auch als Entlüftungsöffnung bezeichnet werden.

Die beiden Arbeitsöffnungen A, B sind zur Verbindung mit einem Verbraucher vorgesehen, der mit unterschiedlichen Arbeitsdrücken beaufschlagt werden soll. An der ersten Arbeitsöffnung A kann ein erster Arbeitsdruck p_{A}, an der zweiten Arbeitsöffnung B ein zweiter Arbeitsdruck p_{B} abgegriffen werden.

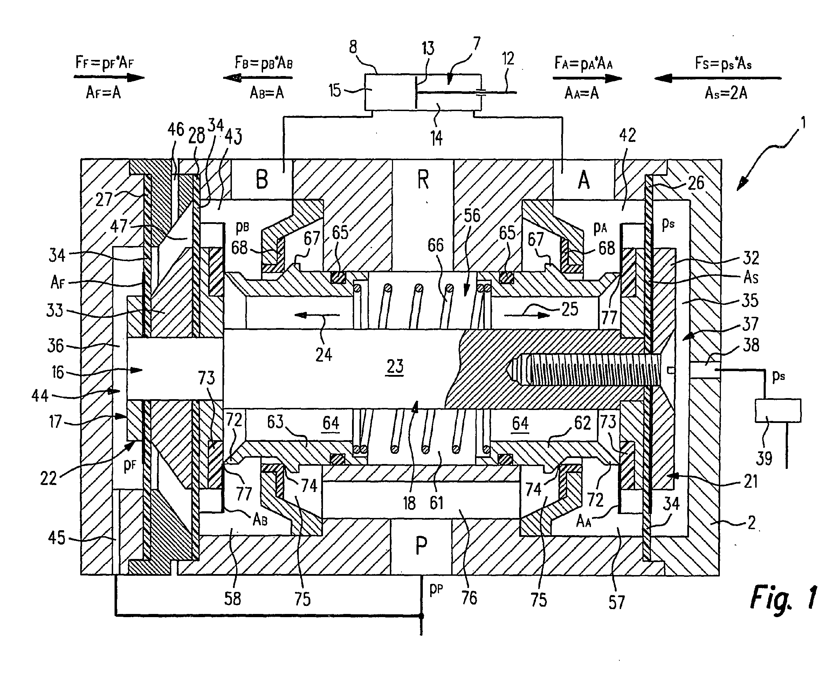

In Fig. 1 ist exemplarisch ein anzusteuernder Verbraucher in Gestalt eines durch Fluidkraft betätigbaren Antriebes 7 illustriert. Das Proportionalventil 1 kann getrennt von dem Antrieb 7 eingesetzt werden, oder als angebaute oder integrierte Komponente.

Der abgebildete Antrieb 7 besitzt ein Antriebsgehäuse 8 und eine relativ zu diesem bewegbare Abtriebseinheit 12. Letztere enthält einen im Antriebsgehäuse 8 verschiebbar geführten Abtriebskolben 13, der zwei Arbeitskammern 14, 15 voneinander abteilt, die jeweils mit einer der beiden Arbeitsöffnungen A, B in Fluidverbindung stehen.

Durch das Proportionalventil 1 kann die Fluidbeaufschlagung an den beiden Arbeitsöffnungen A, B und somit in den beiden Arbeitskammern 14, 15 beeinflusst werden, um die Abtriebseinheit 12 mit einer vorgewählten Geschwindigkeit in der einen oder anderen Richtung zu verlagern und nach Bedarf zu positionieren.

Durch das Proportionalventil 1 lässt sich die für den Betrieb des Verbrauchers gewünschte Druckdifferenz Δ_{P} zwischen dem ersten Arbeitsdruck p_{A} und dem zweiten Arbeitsdruck p_{B} an den beiden Arbeitsöffnungen A, B stufenlos variabel vorgeben. Hierfür maßgeblich mitverantwortlich ist eine im Innern des Ventilgehäuses 2 untergebrachte, in ihrer Gesamtheit mit Bezugsziffer 16 bezeichnete Stellvorrichtung.

Die Stellvorrichtung 16 besitzt ein sich aus mehreren Komponenten zusammensetzendes Steuerglied 17. Letzteres hat längliche Gestalt und erstreckt sich vorzugsweise parallel zur Längsachse des Ventilgehäuses 2.

Das Steuerglied 17 verfügt über ein längliches Antriebsorgan 18, das über zwei in Längsrichtung zueinander beabstandete erste bzw. zweite Antriebseinheiten, die über ein bevorzugt stangenförmiges Verbindungsteil 23 fest miteinander verbunden und dadurch axial bewegungsgekoppelt sind. Insbesondere über die beiden Antriebseinheiten 21, 22 ist das Antriebsorgan 18 in zwei einander entgegengesetzten, durch Pfeile angedeuteten ersten und zweiten Stellrichtungen 24, 25 relativ zum Ventilgehäuse 2 linear verstellbar geführt.

Bei den Ausführungsbeispielen der Fig. 1 bis 12 beinhalten die Antriebseinheiten 21, 22 jeweils mindestens ein bevorzugt elastisch verformbares Membranelement, über das sie unter Abdichtung am Ventilgehäuse 2 aufgehängt sind. Bevorzugt ist die erste Antriebseinheit 21 mit nur einem Membranelement ausgestattet, das im Folgenden als erstes Membranelement 26 bezeichnet sei. Die zweite Antriebseinheit 22 verfügt hingegen über zwei axial beabstandet zueinander angeordnete Membranelemente, die im Folgenden als zweites und drittes Membranelement 27, 28 bezeichnet seien. Das dritte Membranelement 28 befindet sich auf der dem ersten Membranelement 26 zugewandten Axialseite des zweiten Membranelementes 27.

Die Membranelemente 26, 27, 28 sind konzentrisch zu dem Antriebsorgan 18 angeordnet und in ihrem zentralen Bereich zweckmäßigerweise in einem fest mit dem Verbindungsteil 23 verbundenen Halteelement 32, 33 fest eingespannt. Auf diese Weise verbleiben jeweils ringförmige Membranabschnitte 34, die die bewegliche Aufhängung des Antriebsorgans 18 bezüglich des Ventilgehäuses 2 gewährleisten.

Die beiden Antriebseinheiten 21, 22 befinden sich zweckmäßigerweise an den einander entgegengesetzten Endabschnitten des Steuergliedes 17. Jede Antriebseinheit 21, 22 bildet die bewegliche Wand einer gemeinsam mit dem Ventilgehäuse 2 definierten Kammer, die im Falle der ersten Antriebseinheit 21 als Betätigungskammer 35 und im Falle der zweiten Antriebseinheit 22 als Federkammer 36 bezeichnet sei. Durch das erste Membranelement 26 und das zweite Membranelement 27 werden die beiden Kammern 35, 36 jeweils von den sich nach axial innen anschließenden Bereichen fluiddicht abgetrennt.

Die Betätigungskammer 35 ist Bestandteil von allgemein mit Bezugsziffer 37 bezeichneten Betätigungsmitteln, die es ermöglichen, dem Steuerglied 17 und insbesondere dem Antriebsorgan 18 eine Vorgabe-Stellkraft F_{S} in der ersten Stellrichtung 24 aufzuerlegen. Bei der gezeigten Bauform können die Betätigungsmittel 37 die Vorgabe-Stellkraft F_{S} fluidisch erzeugen, sodass die Vorgabe-Stellkraft also aus einer Fluidkraft resultiert. Allerdings wäre es grundsätzlich möglich, die Vorgabe-Stellkraft beispielsweise elektrisch oder mechanisch aufzubringen.

In die Betätigungskammer 35 mündet ein Betätigungskanal 38, der unter Zwischenschaltung einer Steuerventileinrichtung 39 an eine nicht näher dargestellte Steuerdruckquelle angeschlossen ist. Auf diese weise kann durch gesteuerte Zufuhr und Abfuhr eines Steuerfluides ein Steuerdruck p_{S} in der Betätigungskammer 35 eingestellt werden.

Die Steuerdruckquelle ist vorzugsweise mit der das Arbeitsfluid liefernden Druckquelle identisch. Beim Ausführungsbeispiel ist in diesem Zusammenhang vorgesehen, dass der unter Mitwirkung der Steuerventileinrichtung 39 in der Betätigungskammer 35 maximal einstellbare Steuerdruck p_{S max} dem Speisedruck p_{P} entspricht.

Der in der Betätigungskammer 35 herrschende Steuerdruck pₛ beaufschlagt eine von der ersten Antriebseinheit 21 definierte und mithin mit dem Antriebsorgan 18 bewegungsgekoppelte Betätigungsfläche Aₛ. Diese befindet sich teils an dem Halteelement 32 und teils an dem ersten Membranelement 26. Aufgrund der geometrischen und kinematischen Gegebenheiten von Membranelementen ergibt sich dabei insgesamt ein wirksamer Außendurchmesser der Betätigungsfläche A_{S}, der etwas geringer ist als der Außendurchmesser des ringförmigen Membranabschnittes 34. Zur Verdeutlichung ist in Fig. 1 die Betätigungsfläche A_{S} mit einer etwas dickeren Linie markiert.

Der in der Betätigungskammer 35 herrschende Steuerdruck p_{S} wirkt auf die Betätigungsfläche A_{S} ein, woraus als Produkt die momentan wirksame Vorgabe-Stellkraft F_{S} resultiert.

Die erste Antriebseinheit 21 trennt die Betätigungskammer 35 von einer zu dem Antriebsorgan 18 konzentrischen ringförmigen ersten Arbeitskammer 42 ab, die mit der ersten Arbeitsöffnung A in ständiger Verbindung steht. Der somit auch in der ersten Arbeitskammer 42 anstehende erste Arbeitsdruck p_{A} beaufschlagt die erste Antriebseinheit 21 in entgegengesetzter Richtung wie der Steuerdruck p_{S}, wobei die in dieser Beziehung wirksame ringförmige erste Steuerfläche A_{A} in Fig. wiederum durch eine dickere Linie kenntlich gemacht ist. Aus dem Produkt des ersten Arbeitsdruckes p_{A} und der ersten Steuerfläche A_{A} resultiert eine erste Arbeitsdruckkraft F_{A}, die entgegengesetzt zur Vorgabe-Stellkraft F_{S} an der ersten Antriebseinheit 21 und mithin an dem Antriebsorgan 18 angreift.

Die zweite Antriebseinheit 22 begrenzt unter Mitwirkung des axial außen liegenden zweiten Membranelements 27 die schon erwähnte Federkammer 36 und wird von dem in der Federkammer 36 herrschenden Fluiddruck in der zweiten Stellrichtung 25 beaufschlagt. Aufgrund der Membrangeometrie ist die dabei wirksame Beaufschlagungsfläche A_{F} wiederum etwas geringer als die durch den Außenumfang des ringförmigen Membranabschnittes 34 begrenzte Fläche. In Fig. 1 ist die Beaufschlagungsfläche A_{F} durch eine etwas dickere Linie kenntlich gemacht.

Die Federkammer 36 ist Bestandteil von insgesamt mit Bezugsziffer 44 bezeichneten Federmitteln, die so ausgebildet sind, dass sie das Steuerglied 17, genauer gesagt dessen Antriebsorgan 18, im Betrieb des Proportionalventils 1 ständig mit einer Federkraft F_{F} in der zweiten Stellrichtung 25 beaufschlagen können.

Bei den Ausführungsbeispielen der Fig. 1 bis 12 sind die Federmittel 44 von einer Fluidfeder gebildet, die die elastische Federkraft F_{F} auf fluidische Weise bereitstellt. Diese Fluidfeder ist zweckmäßigerweise eine Gasfeder, wobei sie im speziellen Fall des Ausführungsbeispiels, das mit einem pneumatischen Arbeitsfluid betrieben wird, als Luftfeder ausgeführt ist.

Um dies zu realisieren, steht die Federkammer 36 über einen Beaufschlagungskanal 45 mit einer Vorspanndruckquelle in Verbindung, die zweckmäßigerweise unmittelbar von der das Arbeitsfluid liefernden Druckquelle gebildet ist. Bei dem abgebildeten bevorzugten Ausführungsbeispiel kommuniziert die Federkammer 36 über den Beaufschlagungskanal 35 ständig mit der Speiseöffnung P und zweigt somit von dort das zur Bildung der Luftfeder verwendete Fluid ab.

Solange die Speiseöffnung P mit Arbeitsfluid versorgt wird, steht somit ein als Vorspanndruck p_{F} bezeichneter Fluiddruck, dessen Höhe dem Speisedruck p_{P} entspricht, in der Federkammer 36 an. Aus ihm und der Beaufschlagungsfläche A_{F} ergibt sich die Federkraft F_{F}.

Die zweite Antriebseinheit 22 begrenzt auf der der Federkammer 36 axial entgegengesetzten Seite eine das Antriebsorgan 18 konzentrisch umgebende zweite Arbeitskammer 43, die mit der zweiten Arbeitsöffnung B verbunden ist und in der mithin der zweite Arbeitsdruck p_{B} ansteht.

Der zweite Arbeitsdruck p_{B} beaufschlagt eine der ersten Steuerfläche A_{A} axial zugewandte und mithin in der zweiten Stellrichtung 25 orientierte ringförmige zweite Steuerfläche A_{B}, die von der zweiten Antriebseinheit 22 definiert wird. Genauer gesagt wird die zweite Steuerfläche A_{B} teils von dem Halteelement 33 und teils von dem dritten Membranelement 28 gebildet. Zwischen den ringförmigen Membranabschnitten 34 des zweiten und dritten Membranelementes 27, 28 befindet sich ein über einen Atmungskanal 46 ständig mit der Atmosphäre kommunizierender ringförmiger Zwischenraum 47.

Die Zweifachanordnung von Membranelementen 27, 28 an der zweiten Antriebseinheit 22 ermöglicht es, die Beaufschlagungsfläche A_{F} und die zweite Steuerfläche A_{B} in einem voneinander unabhängigen Größenverhältnis auszulegen. Zur Verdeutlichung ist die zweite Steuerfläche A_{B} ebenfalls durch eine dickere Linie kenntlich gemacht. Es bietet sich insbesondere die beim Ausführungsbeispiel realisierte Möglichkeit, die beiden vorgenannten Flächen in gleicher Größe auszubilden.

Aus dem Produkt des zweiten Arbeitsdruckes p_{B} und der zweiten Steuerfläche A_{B} ergibt sich eine in der ersten Stellrichtung 24 auf die zweite Antriebseinheit 22 und mithin auf das Antriebsorgan 18 einwirkende zweite Arbeitsdruckkraft F_{B}.

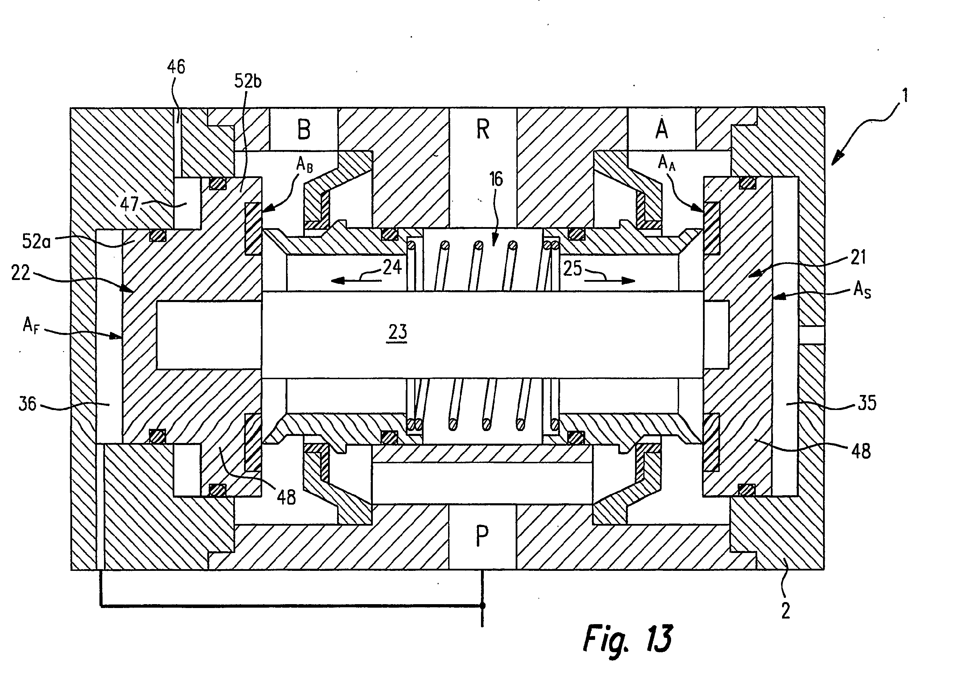

Während bei dem Ausführungsbeispiel der Fig. 1 bis 12 die zur Beaufschlagung mit Fluid vorgesehenen Flächen wenigstens teilweise als Membranflächen ausgeführt sind, illustrieren die Fig. 13 bis 15 Ausführungsbeispiele, bei denen die durch das Fluid beaufschlagten Flächen ausschließlich als Kolbenflächen ausgeführt sind. Hierzu sind beide Antriebseinheiten 21, 22 als Antriebskolben 48 ausgebildet, die zum einen an dem Verbindungsteil 23 befestigt sind und zum anderen unter Abdichtung im Ventilgehäuse verschiebbar geführt sind.

Abgesehen von der unterschiedlichen Ausgestaltung der beiden Antriebseinheiten 21, 22 unterscheidet sich die Bauform der Fig. 13 nicht von derjenigen der Fig. 1 bis 12. Um hier die Beaufschlagungsfläche A_{F} und die zweite Steuerfläche A_{B} größenmäßig aufeinander abstimmen zu können, ist der die zweite Antriebseinheit 22 bildende Kolben 48 als Stufenkolben ausgeführt, der über zwei Kolbenabschnitte 52a, 52b unterschiedlichen Durchmessers verfügt, die jeweils gesondert gegenüber dem Ventilgehäuse 2 abgedichtet sind und zwischen denen sich ein über einen Atmungskanal 46 mit der Atmosphäre verbundener ringförmiger Zwischenraum 47 befindet.

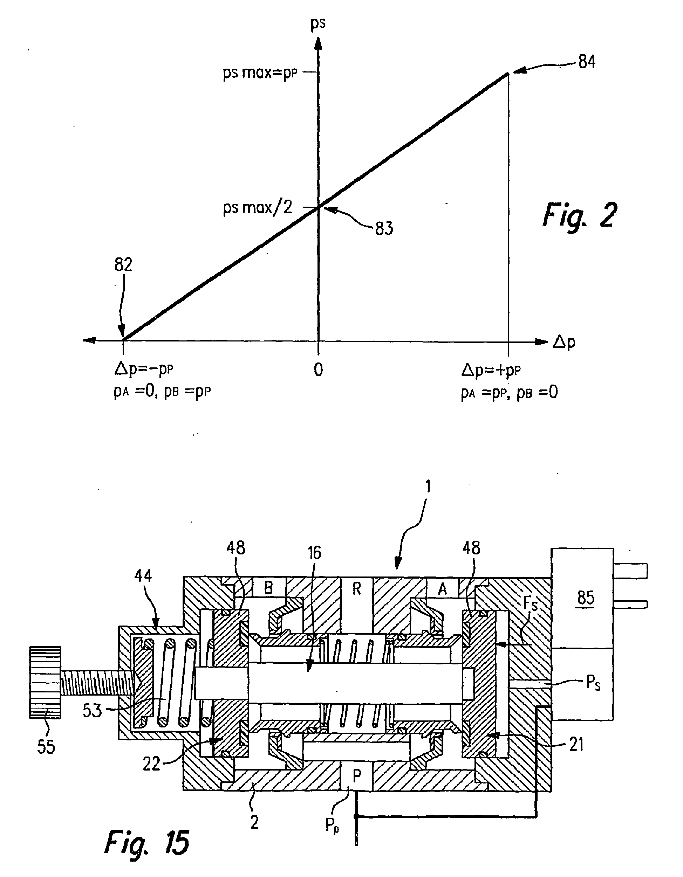

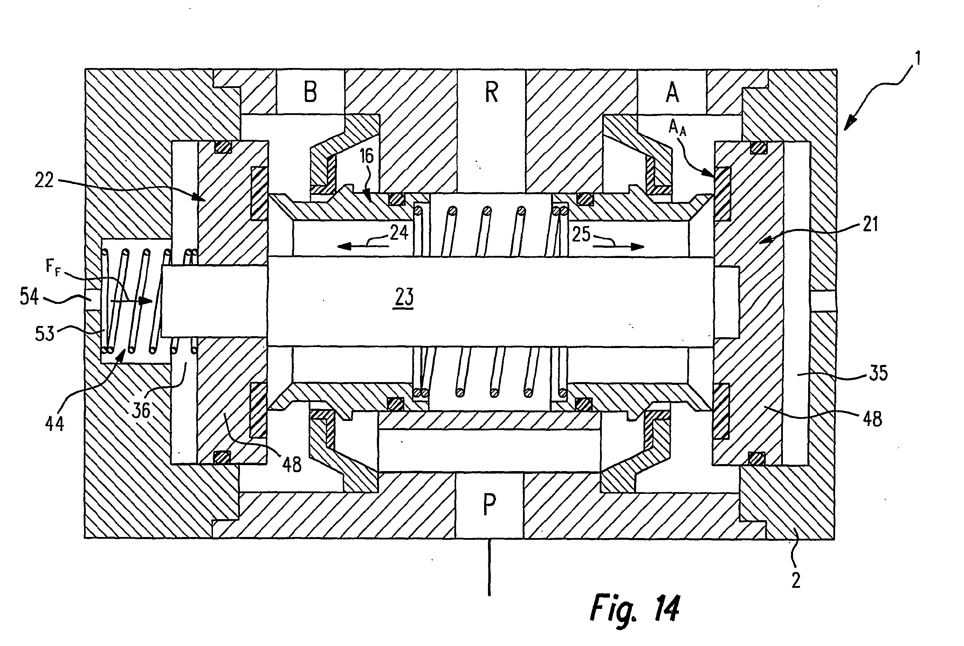

Bei den Ausführungsformen der Fig. 14 und 15 ergibt sich eine weitere konstruktive Abweichung dadurch, dass die Federmittel 44 jeweils von einer mechanischen Federeinrichtung gebildet sind, die in der Federkammer 36 untergebracht ist. Beim Ausführungsbeispiel handelt es sich um eine mechanische Druckfedereinrichtung 53, die sich zum einen an dem Antriebsorgan 18 und zum anderen am Ventilgehäuse 2 abstützt, sodass sich eine in der zweiten Stellrichtung 25 auf das Antriebsorgan 18 einwirkende Federkraft F_{F} einstellt. Um ein Atmen zu ermöglichen, steht die Federkammer 36 zweckmäßigerweise über eine Atmungsöffnung 54 in ständiger Verbindung mit der Atmosphäre.

Wird auf eine mechanische Federeinrichtung zurückgegriffen, kann der Kolben 48 der zweiten Antriebseinheit 22 als einfacher, unabgestufter Kolben ausgeführt werden. Bei einer Membranausführung genügt ein einziges Membranelement. Die gegenseitige Abstimmung der Stellkräfte kann durch ausgewählte Verwendung einer Federeinrichtung mit entsprechender Federkennlinie vorgenommen werden.

Es besteht ferner die in Fig. 15 angedeutete Möglichkeit, der mechanischen Federeinrichtung Einstellmittel 55 zuzuordnen, mit denen sich die Federvorspannung variabel und insbesondere stufenlos vorgeben lässt.

Die Verwendung einer mechanischen Federeinrichtung bei den Federmitteln 44 ist im Übrigen auch bei Bauformen möglich, die wie bei den Fig. 1 bis 12 auf Membranflächen zur Realisierung der mit Fluid beaufschlagbaren Flächen zurückgreifen.

Das Steuerglied 17 sitzt in einer im Ventilgehäuse 2 definierten Aufnahmekammer 56, die zwei die beiden Antriebseinheiten 21, 22 aufnehmende erweiterte Kammer-Endabschnitte 57, 58 und einen von dem Verbindungsteil 23 durchsetzten, die beiden Kammer-Endabschnitte 57, 58 miteinander verbindenden Verbindungsabschnitt 61 geringeren Querschnittes aufweist.

Das Steuerglied 17 enthält zusätzlich zu dem Antriebsorgan 18 zwei das Verbindungsteil 23 koaxial umschließende, axial aufeinanderfolgend angeordnete erste und zweite Verschlusselemente 62, 63. Die Verschlusselemente 62, 63 sind jeweils ring- oder hülsenförmig ausgeführt, wobei sie das Verbindungsteil 23 derart mit radialem Abstand umschließen, dass sich dazwischen ein Ringraum 64 ergibt.

Die beiden Verschlusselemente 62, 63 sind unabhängig voneinander sowohl relativ zum Antriebsorgan 18 als auch relativ zum Ventilgehäuse 2 in den beiden Stellrichtungen 24, 25 bewegbar. Das erste Verschlusselement 62 ist der ersten Arbeitsöffnung A, das zweite Verschlusselement 63 der zweiten Arbeitsöffnung B zugeordnet.

Die Entlastungsöffnung R mündet axial zwischen den beiden Verschlusselementen 62, 63 seitlich in den Verbindungsabschnitt 61 ein und kommuniziert somit ständig mit den beiden Ringräumen 64.

Beide Verschlusselemente 62, 63 sind mittels geeigneter Dichtungen 65 unter Abdichtung in dem Verbindungsabschnitt 61 verschiebbar geführt. Zwischen ihnen befindet sich eine bevorzugt mechanische Federeinrichtung 66, die gleichzeitig an beiden Verschlusselementen 62, 63 angreift und diese federnd in einander entgegengesetzte Stellrichtungen vorspannt. Das erste Verschlusselement 62 wird in Richtung der ersten Antriebseinheit 21 gedrückt, das zweite Verschlusselement 63 in Richtung der zweiten Antriebseinheit 22.

Allerdings ist der Stellweg der beiden Verschlusselemente 62, 63 in der jeweiligen Vorspannrichtung begrenzt. Die Begrenzung wird dadurch bewirkt, dass ein ringförmiger erster Verschlussabschnitt auf einen einen Ventilsitz bildenden, das betreffende Verschlusselement 62, 63 konzentrisch umschließenden ventilgehäusefesten ersten Gegenabschnitt 68 aufläuft.

Der erste Verschlussabschnitt 67 und der erste Gegenabschnitt 68 bilden jeweils erste Sitzventilmittel, die die Fluidströmung zwischen der jeweils zugeordneten ersten bzw. zweiten Arbeitsöffnung A, B und der Speiseöffnung P steuern. Dabei begrenzen der erste Verschlussabschnitt 67 und der erste Gegenabschnitt 68 jeweils einen ersten Überströmspalt 74 zwischen der zugeordneten ersten bzw. zweiten Arbeitskammer 42, 43 und einer um das jeweilige Verschlusselement 62, 63 herum ausgebildeten Speisekammer 75, die über eine radial außerhalb des Verbindungsabschnittes 61 im ventilgehäuse 2 verlaufende Längsbohrung 76 mit der Speiseöffnung P verbunden ist.

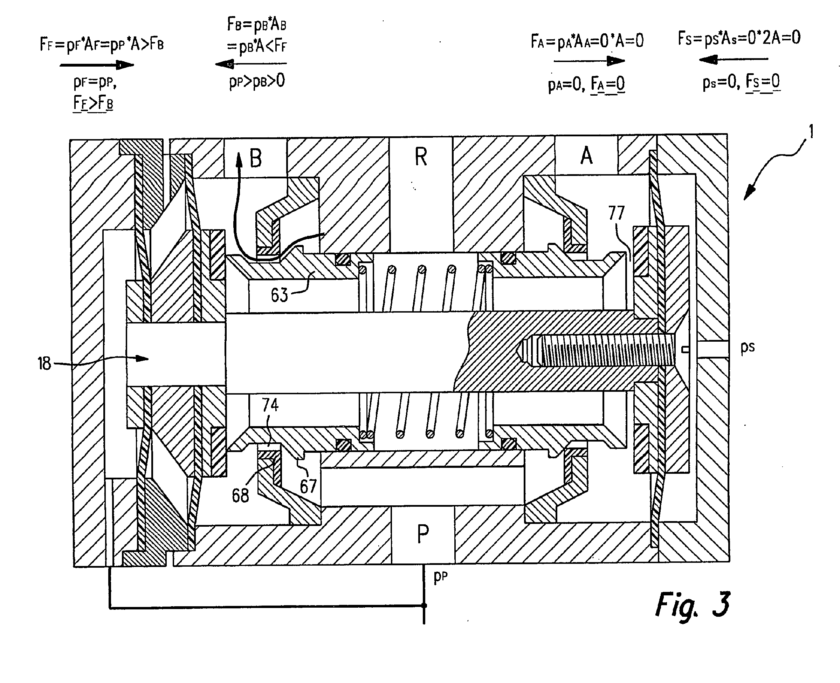

Befindet sich der erste Verschlussabschnitt 67 in der aus Fig. 1 hervorgehenden Schließstellung, kann kein Fluid aus der Speiseöffnung P in die zugeordnete Arbeitskammer 42, 43 überströmen. Ist der erste Verschlussabschnitt 67 hingegen mehr oder weniger weit vom ersten Gegenabschnitt 68 abgehoben, kann Arbeitsfluid aus der Speiseöffnung P zur zugeordneten ersten bzw. zweiten Arbeitsöffnung A, B überströmen (siehe beispielsweise Fig. 3, 5, 7 und 9).

Dem ersten Verschlussabschnitt 67 in Richtung zur zugeordneten Antriebseinheit 21, 22 axial vorgelagert ist ein jeweiliges Verschlusselement 62, 63 mit einem ringförmigen zweiten Verschlussabschnitt 72 versehen. Diesem liegt ein an der zugeordneten Antriebseinheit 21, 22 vorgesehener ringförmiger zweiter Gegenabschnitt 73 gegenüber. Ein jeweiliges Paar bestehend aus einem zweiten Verschlussabschnitt 72 und einem zweiten Gegenabschnitt 73 bildet zweite Sitzventilmittel, die in der Lage sind, die Fluidströmung zwischen einer jeweiligen Arbeitsöffnung A, B und der Entlastungsöffnung R zu steuern. Hierzu definiert ein jeweiliger zweiter Verschlussabschnitt 72 mit dem zugeordneten zweiten Gegenabschnitt 73 einen zweiten Überströmspalt 77 zwischen der betreffenden Arbeitskammer 42, 43 und dem vom Verschlusselement 62, 63 umgrenzten Ringraum 64, der durch die Federeinrichtung 66 hindurch mit der Entlastungsöffnung R verbunden ist.

Im Folgenden sei anhand der Fig. 1 bis 10 eine vorteilhafte Auslegung und Betriebsweise des Proportionalventils 1 erläutert. Für die einzelnen Betriebszustände gelten die in den verschiedenen Figuren vermerkten Druck-, Flächen- und Kraftangaben.

Die Federmittel 44 sind so ausgeführt, dass aufgrund der ständig anstehenden Federkraft F_{F} bei minimaler Vorgabe-Stellkraft Fₛ an der einen Arbeitsöffnung - beim Ausführungsbeispiel an der zweiten Arbeitsöffnung B - ein maximaler Arbeitsdruck p_{B} ansteht, während der an der anderen Arbeitsöffnung - vorliegend an der ersten Arbeitsöffnung A - anstehende Arbeitsdruck p_{A} ein Minimum aufweist. Die minimal einstellbare Vorgabe-Stellkraft F_{S} ist beim Ausführungsbeispiel gleich null. Es sei ferner davon ausgegangen, dass die Betätigungsfläche A_{S} doppelt so groß ist wie sowohl die Beaufschlagungsfläche A_{F} als auch jede der Steuerflächen A_{A}, A_{B}. In den Figuren ist der Betrag der vorgenannten drei Flächen mit "A" und der Betrag der Betätigungsfläche A_{S} mit "2 A" angegeben.

Die Fig. 1 zeigt das Proportionalventil 1 in der Außerbetriebsstellung, im vollständig drucklosen Zustand. Es liegt weder ein Speisedruck p_{P} noch ein Steuerdruck p_{S} an. Da die Federkammer 36 an die Speiseöffnung P angeschlossen ist, ist mithin auch der Vorspanndruck p_{F} gleich null. Als Resultat ergibt sich, dass an beiden Antriebseinheiten 21, 22 die daran angreifenden Kräfte gleich null und mithin im Gleichgewicht sind. Sowohl die ersten als auch die zweiten Überströmspalte 74, 77 sind geschlossen.

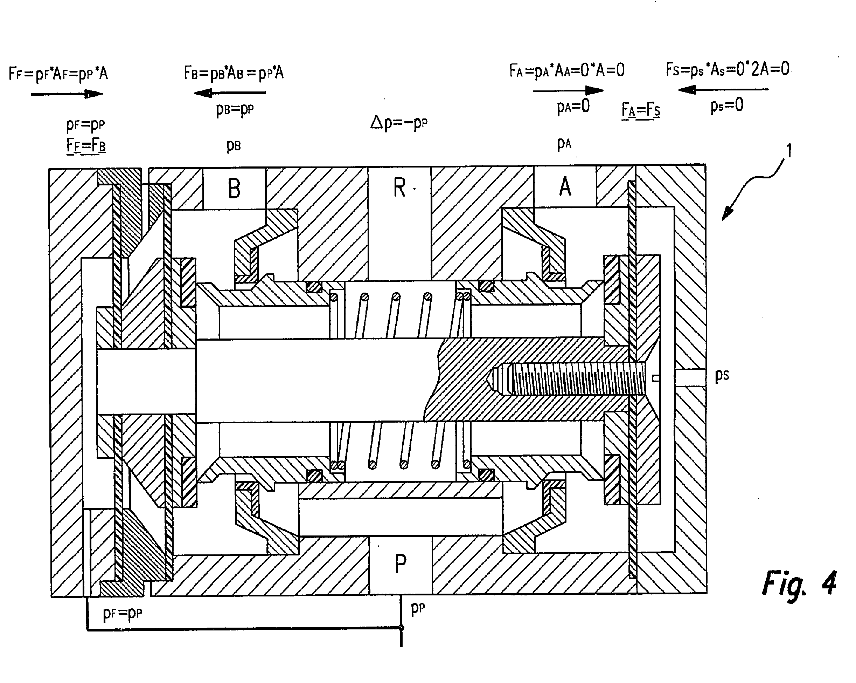

Um das Proportionalventil 1 in Betrieb zu nehmen, wird gemäß Fig. 3 ohne Aufbringen eines Steuerdruckes p_{S} Arbeitsfluid an die Speiseöffnung P zugeführt, sodass sich dort, wie auch in der angeschlossenen Federkammer 36, der Speisedruck p_{P} und der gleich hohe Vorspanndruck p_{F} aufbauen (Fig. 3). Die Federkraft F_{F} drückt hier das Antriebsorgan 18 in der Zeichnung nach rechts, sodass der vom zweiten Verschlusselement 63 beherrschte erste Überströmspalt 74 geöffnet wird und Arbeitsfluid zur zweiten Arbeitsöffnung B überströmt. Dies geschieht so lange, bis die zweite Arbeitsdruckkraft F_{B} gleich groß ist wie die Federkraft F_{F}. Das dann vorliegende Kräftegleichgewicht hat die aus Fig. 4 ersichtliche Grundstellung zur Folge, die mechanisch der in Fig. 1 gezeigten Außerbetriebsstellung entspricht, bei der jedoch der zweite Arbeitsdruck p_{B} sein Maximum erreicht hat, das dem Speisedruck p_{P} entspricht. Da der erste Arbeitsdruck p_{A} weiterhin gleich null ist, lässt sich an den beiden Arbeitsöffnungen A, B ein Differenzdruck Δp in Höhe von -p_{P} abgreifen. Dies entspricht dem in dem Diagramm der Fig. 2 bei 82 angedeuteten Betriebszustand.

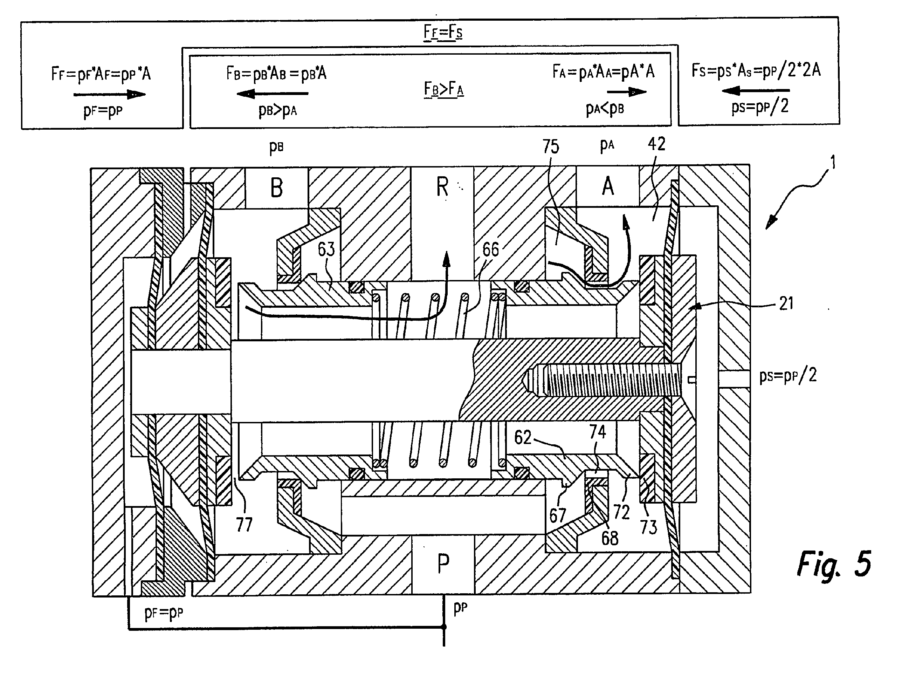

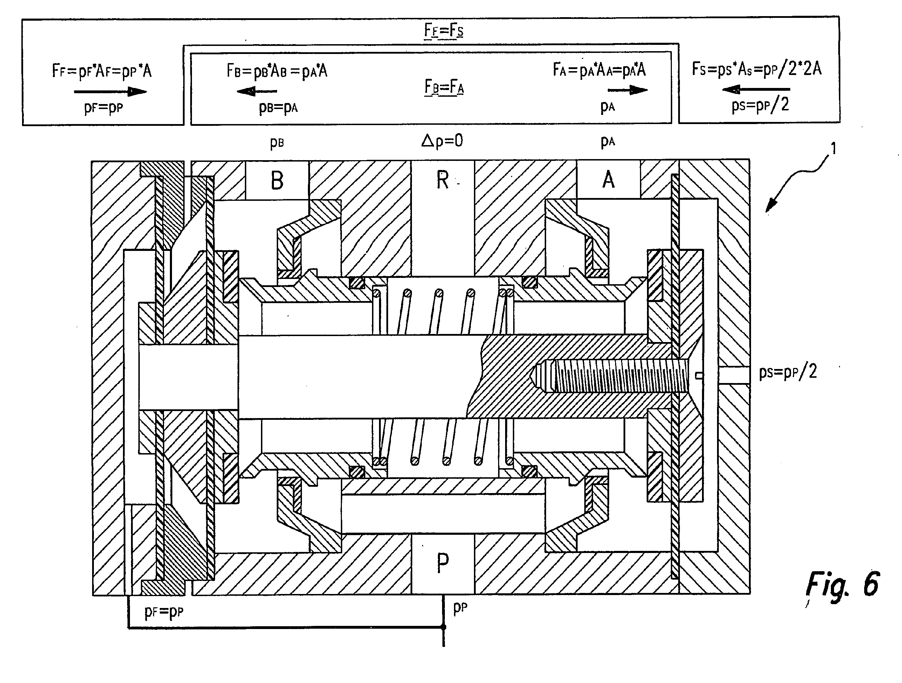

Die Fig. 6 zeigt den in Fig. 2 bei 83 ersichtlichen Betriebszustand, der sich durch eine Druckdifferenz Δp von null zwischen den beiden Arbeitsöffnungen A, B auszeichnet (Betriebszustand 89 in Fig. 2). Dieser Betriebszustand ist in Fig. 6 wiedergegeben. Erreicht wird er dadurch, dass gemäß Fig. 5 in der Betätigungskammer 35 ein Steuerdruck p_{S} angelegt wird, der halb so groß ist wie der Vorspanndruck p_{F} (der seinerseits beim Ausführungsbeispiel dem Speisedruck p_{P} entspricht). Hier ergibt es sich, dass sich die Federkraft F_{F} und die Vorgabe-Stellkraft F_{S} gegenseitig ausgleichen, sodass aufgrund der gegenüber der ersten Arbeitsdruckkraft F_{A} größeren zweiten Arbeitsdruckkraft F_{B} das Antriebsorgan 18 in der Zeichnung gemäß Fig. 5 nach links verlagert wird. Da das zweite Verschlusselement 63 durch die Anlage am ersten Gegenabschnitt 68 dieser Bewegung nicht folgen kann, öffnet sich der der zweiten Antriebseinheit 22 zugeordnete zweite Überströmspalt 77, und Arbeitsfluid strömt aus der zweiten Arbeitsöffnung B zur Entlastungsöffnung R ab, mit der Folge, dass sich der zweite Arbeitsdruck p_{B} reduziert. Gleichzeitig erhöht sich der erste Arbeitsdruck p_{A}, weil die erste Antriebseinheit 21 über den zweiten Gegenabschnitt 73 auf den zweiten Verschlussabschnitt 72 des ersten Verschlusselementes 62 einwirkt und dieses entgegen der Rückstellkraft der Federeinrichtung 66 in der ersten Stellrichtung 24 verlagert, sodass der vom ersten Verschlusselement 62 beherrschte erste Überströmspalt 74 geöffnet wird. Es kann dann Arbeitsfluid aus der benachbarten Speisekammer 75 in die erste Arbeitskammer 42 und somit zur ersten Arbeitsöffnung A überströmen.

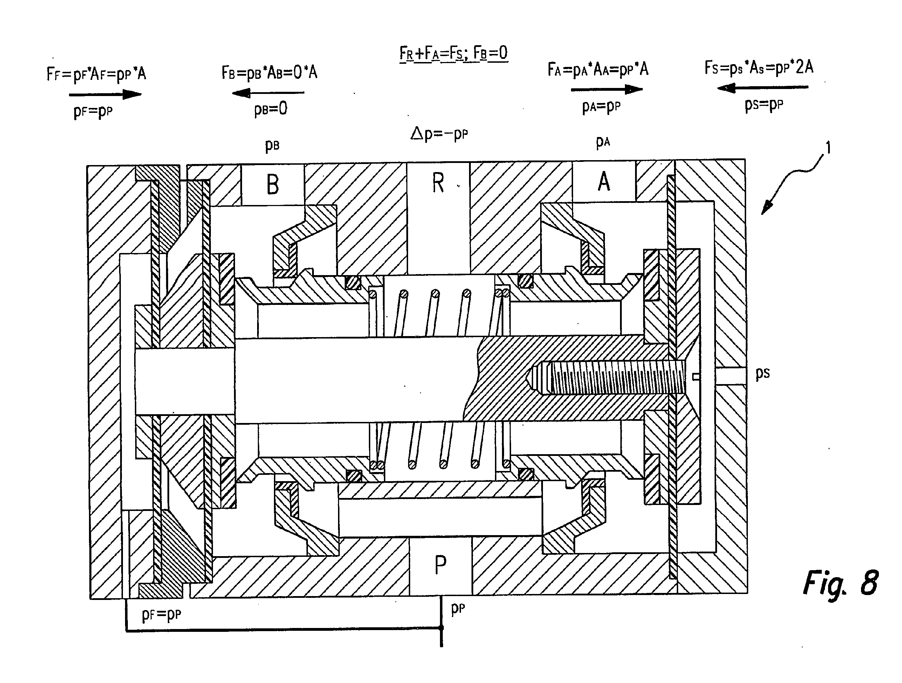

Die Fig. 8 zeigt einen Betriebszustand, der sich ergibt, wenn als Steuerdruck p_{S} ein Druck angelegt wird, der dem Vorspanndruck p_{F} (= p_{P}) entspricht. In diesem in Fig. 2 bei 84 ersichtlichen Betriebszustand ergibt sich eine Druckdifferenz Δp = +p_{P}, weil hier der erste Arbeitsdruck p_{A} sein dem Speisedruck p_{P} entsprechendes Maximum und der zweite Arbeitsdruck p_{B} seinen Minimalwert von null erreicht hat. In diesem Betriebszustand ist die zweite Arbeitsdruckkraft F_{B} gleich null, während die Vorgabe-Stellkraft F_{S} der Summe aus der Federkraft F_{F} und der ersten Arbeitsdruckkraft F_{A} entspricht.

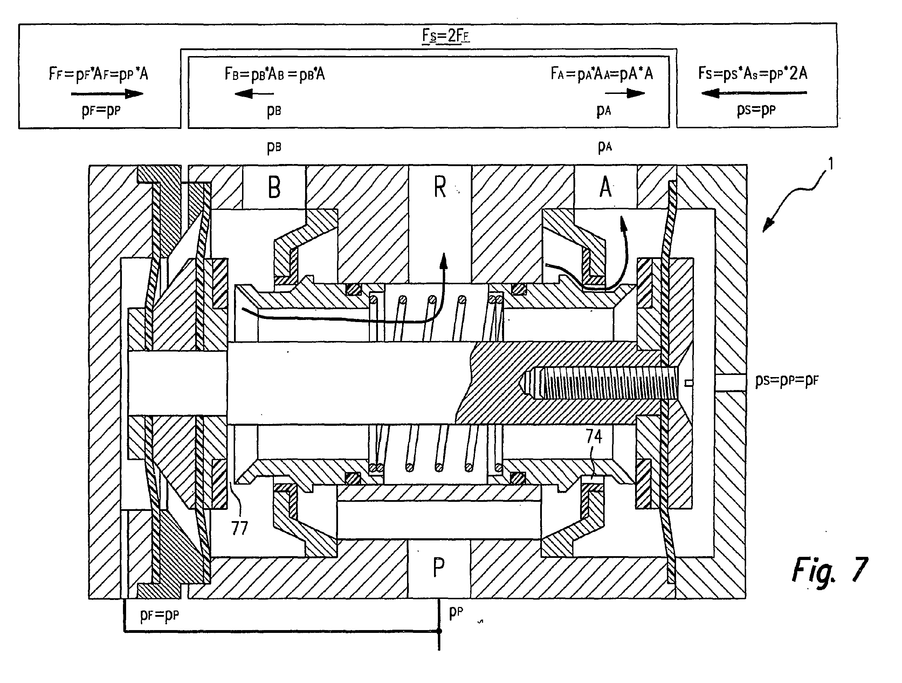

Um diesen Zustand zu erreichen, wird gemäß Fig. 7 in der Betätigungskammer 35 ein dem Vorspanndruck entsprechender Steuerdruck p_{S} angelegt. Die daraus resultierende Vorgabe-Stellkraft ist doppelt so groß wie die Federkraft F_{F}. In der Folge verlagert sich das Steuerglied 17 gemäß Fig. 7 in einer Weise, die dem schon anhand der Fig. 5 erläuterten Ablauf entspricht.

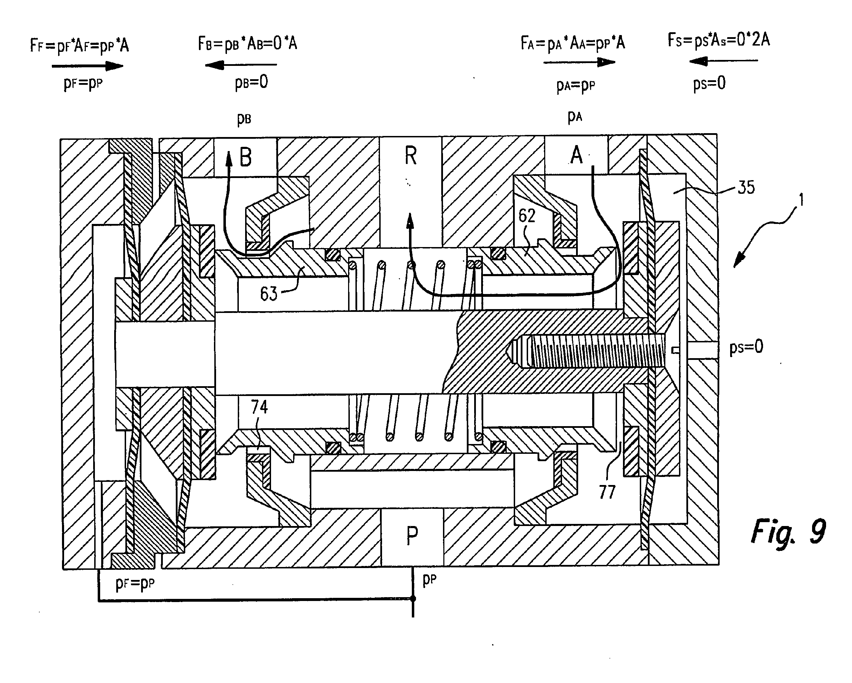

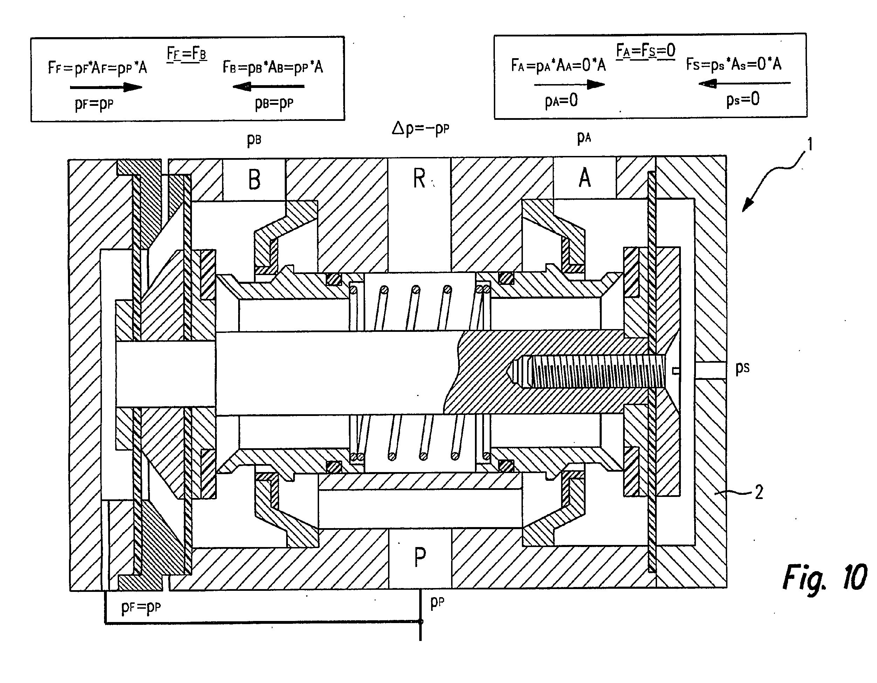

Soll der Differenzdruck zu einem beliebigen Zeitpunkt so geändert werden, dass der zweite Arbeitsdruck p_{B} ansteigt und der erste Arbeitsdruck p_{A} verringert wird, genügt es, den Steuerdruck p_{S} zu reduzieren. So erreicht man beispielsweise ausgehend von dem in Fig. 8 gezeigten Betriebszustand erneut die in Fig. 10 nochmals dargestellte, der Fig. 4 entsprechende Grundstellung, indem gemäß Fig. 9 in der Betätigungskammer 35 der minimale Steuerdruck p_{S} angelegt wird, der beim Ausführungsbeispiel dem Betrag null entspricht. Gemäß Fig. 9 hat dies zur Folge, dass das Antriebsorgan 18 durch die Federkraft F_{F} nach rechts verschoben wird, sodass der dem zweiten Verschlusselement 63 zugeordnete erste Überströmspalt 74 ebenso wie der dem ersten Verschlusselement 62 zugeordnete zweite Überströmspalt 77 freigegeben wird. Die erste Arbeitsöffnung A wird dann entlastet, während gleichzeitig der zweiten Arbeitsöffnung B Arbeitsfluid zugeführt wird, mit der Folge eines Abbaus des ersten Arbeitsdruckes p_{A} und eines Aufbaus des zweiten Arbeitsdruckes p_{B}.

Der jeweilige Betriebszustand des Proportionalventils 1 lässt sich also sehr einfach durch alleinige Variation des Steuerdruckes p_{S} zwischen dem Wert null und einem positiven höheren Druckwert variieren. Dabei ergibt sich der momentane Betriebszustand aus der in Fig. 2 abgebildeten Kennlinie.

Gewährleistet wird die Funktionalität des Proportionalventils unter anderem auch dadurch, dass die beiden Arbeitsöffnungen A, B jeweils mit entweder der Speiseöffnung P oder der Entlastungsöffnung R verbunden werden können, und zwar in Abhängigkeit von der momentanen Stellung des Steuergliedes 17, die wiederum durch den momentan anstehenden Steuerdruck p_{S} beeinflusst wird.

Die Betriebsweise bei einem Proportionalventil 1, das gemäß Fig. 14 und 15 mit einer mechanischen Federeinrichtung zur Realisierung der Federmittel 44 ausgestattet ist, entspricht der soeben beschriebenen. Es wird lediglich die Federkraft F_{F} nicht fluidisch, sondern mechanisch bereitgestellt.

Bei der in Fig. 15 gezeigten Ausführungsform besteht noch die Möglichkeit, bei vorgegebenem Speisedruck p_{P} und einem binär schaltenden 3/2-Vorsteuerventil 85 für den Steuerdruck p_{S}, den ersten Arbeitsdruck p_{A} und den zweiten Arbeitsdruck p_{B} einzustellen. Die Federkraft F_{F} der zur Regelung eingesetzten mechanischen Federmittel 44 bei größter Vorspannung muss hier der Vorgabe-Stellkraft F_{S} entsprechen. Beträgt der Steuerdruck p_{S} gleich null, ist die erste Arbeitsöffnung A entlüftet, und der zweite Arbeitsdruck p_{B} verfügt über den eingestellten Wert. Liegt hingegen ein bestimmter Steuerdruck p_{S} in der Betätigungskammer 35 an, ergeben sich gerade umgekehrte Zustände mit entlüfteter zweiter Arbeitsöffnung B und mit einer ersten Arbeitsöffnung A, an der der eingestellte Arbeitsdruck abgreifbar ist.

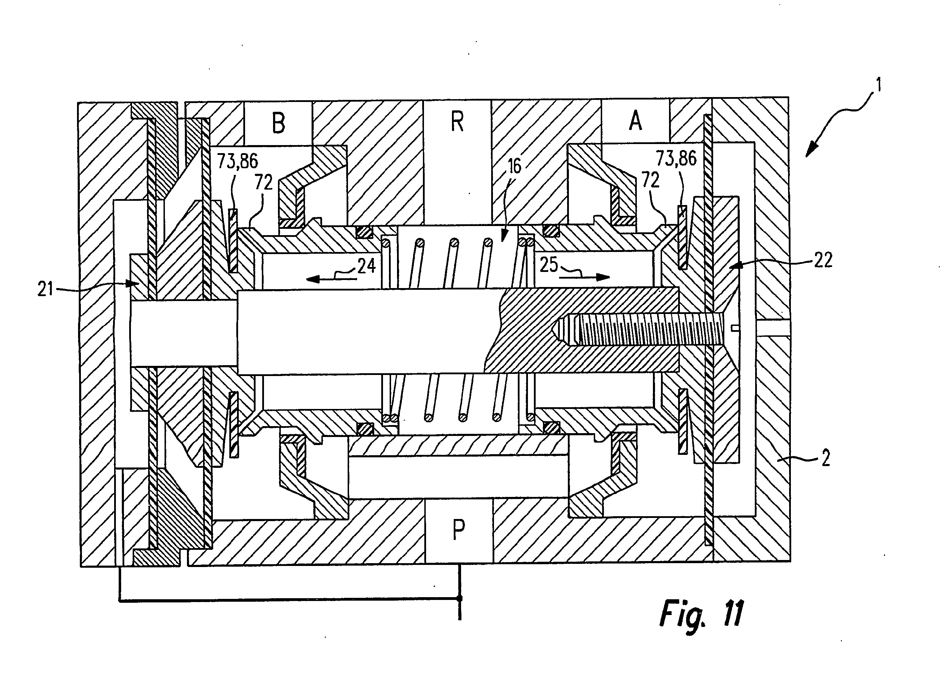

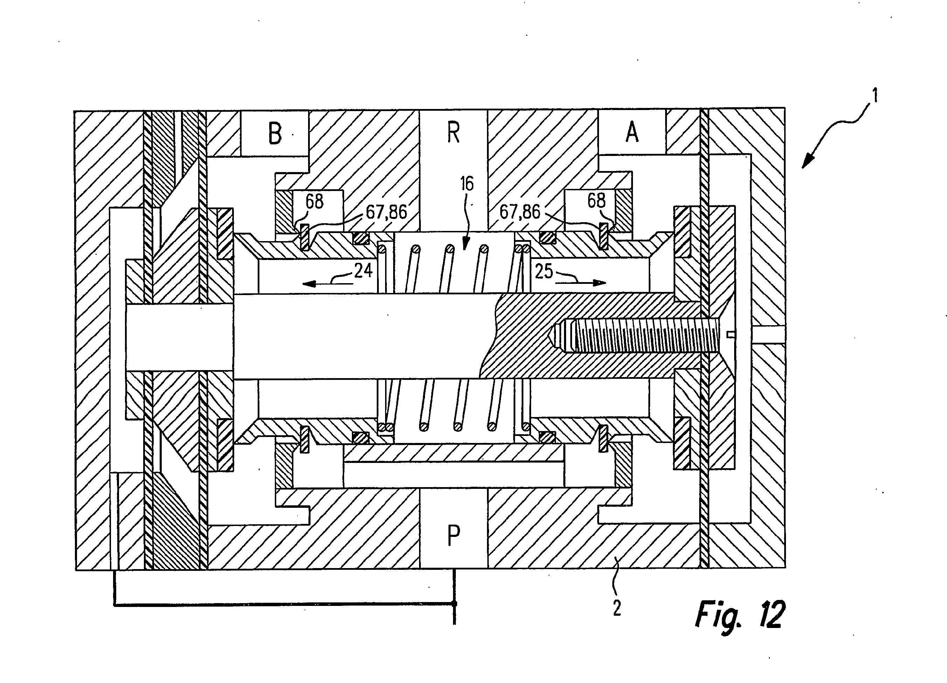

Bei dem Proportionalventil ist es, wie geschildert, erforderlich, dass durch die beiden Verschlusselemente 62, 63 zeitweilig gleichzeitig beide zugeordneten ersten und zweiten Überströmspalte 74, 77 dicht geschlossen werden. Um dies zu realisieren, bedarf es einer sehr hohen Fertigungsgenauigkeit. Es ist daher empfehlenswert, zum Ausgleich etwaiger Fertigungstoleranzen auf eine besondere Ausgestaltung der Paarungen von Verschlussabschnitten und Gegenabschnitten zurückzugreifen, wie sie anhand der Fig. 11 und 12 exemplarisch illustriert ist. Diese Ausgestaltung sieht vor, von den beiden miteinander kooperierenden Abschnitten wenigstens einen Abschnitt als in den Stellrichtungen 24, 25 flexible Dichtlippe 86 auszubilden. Beim Ausführungsbeispiel der Fig. 12 ist ein jeweiliger erster Verschlussabschnitt 67 als derartige Dichtlippe ausgeführt, die im Bereich des Außenumfanges des zugeordneten Verschlusselementes 62, 63 fixiert ist. Bei der in Fig. 11 gezeigten Ausführungsform ist der an den Antriebseinheiten 21, 22 vorgesehene zweite Gegenabschnitt 73 in Form einer solchen, bevorzugt gummielastischen Dichtlippe 86 ausgeführt. Die Dichtlippe 86 wird durch den rückseitig an ihr anstehenden Überdruck in Richtung des mit ihr kooperierenden anderen Abschnittes gedrückt, sodass bei gegenseitigem Kontakt die für die sichere Dichtung erforderliche Anpresskraft gewährleistet ist. Gleichzeitig ist aber die Dichtlippe 86 in der Lage, entgegen der Stellkraft des axial auf sie einwirkenden Abschnittes zurückzuweichen und dadurch etwaige Herstellungs- und Montagetoleranzen auszugleichen.

## Patentansprüche

1. Differenzdruck-Proportionalventil, mit einem eine Speiseöffnung (P), eine Entlastungsöffnung (R) und zwei Arbeitsöffnungen (A, B) aufweisenden Ventilgehäuse (2) sowie mit einer Stellvorrichtung (16) zur Einstellung einer gewünschten Druckdifferenz zwischen den an den beiden Arbeitsöffnungen (A, B) herrschenden Arbeitsdrücken, wobei die Stellvorrichtung (16) ein bewegliches Steuerglied (17) aufweist, das stellungsabhängig in der Lage ist, die beiden Arbeitsöffnungen (A, B) jeweils mit entweder der Speiseöffnung (P) oder der Entlastungsöffnung (R) zu verbinden, wobei dem Steuerglied (17) die an den beiden Arbeitsöffnungen (A, B) herrschenden Arbeitsdrücke aufgeschaltet sind, mit Betätigungsmitteln (37), durch die dem Steuerglied (17) in einer ersten Stellrichtung (24) eine der gewünschten Druckdifferenz entsprechende Vorgabe-Stellkraft auferlegbar ist, und mit Federmitteln (44), die das Steuerglied (17) im Betrieb des Ventils ständig derart in einer der ersten Stellrichtung (24) entgegengesetzten zweiten Stellrichtung (25) mit einer Federkraft beaufschlagen, dass bei minimaler Vorgabe-Stellkraft an der einen Arbeitsöffnung (B) ein maximaler und an der anderen Arbeitsöffnung (A) ein minimaler Arbeitsdruck ansteht, wobei das Steuerglied (17) ein entsprechend den an ihm angreifenden Kräfteverhältnissen in der einen oder anderen Stellrichtung (24, 25) relativ zum Ventilgehäuse (2) bewegbares Antriebsorgan (18) aufweist, auf das zum einen die Vorgabe-Stellkraft und die Federkraft und zum anderen aus den beiden Arbeitsdrücken resultierende erste und zweite Arbeitsdruckkräfte, jeweils einander entgegengesetzt, einwirken, **dadurch gekennzeichnet, dass** das Steuerglied (17) zwei unabhängig voneinander relativ zum Antriebsorgan (18) und zum Ventilgehäuse (2) in den beiden Stellrichtungen (24, 25) bewegbare, jeweils einer der Arbeitsöffnungen (A, B) zugeordnete Verschlusselemente (62, 63) enthält, die jeweils zwei Verschlussabschnitte (67, 72) aufweisen, von denen der erste Verschlussabschnitt (67) durch Zusammenwirken mit einem am Ventilgehäuse (2) vorgesehenen ersten Gegenabschnitt (68) die Fluidströmung zwischen der zugeordneten Arbeitsöffnung (A, B) und der Speiseöffnung (P) und der zweite Verschlussabschnitt (72) durch Zusammenwirken mit einem am Antriebsorgan (18) vorgesehenen zweiten Gegenabschnitt (73) die Fluidströmung zwischen der zugeordneten Arbeitsöffnung (A, B) und der Entlastungsöffnung (R) steuert, wobei die Verschlusselemente (62, 63) federnd in einander entgegengesetzte Stellrichtungen (24, 25) vorgespannt sind und wobei der Stellweg der Verschlusselemente (62, 63) durch das Erreichen der die Verbindung zwischen einer Arbeitsöffnung (A, B) und der Speiseöffnung (P) unterbrechenden Schließstellung bezüglich des Ventilgehäuses (2) begrenzt ist.

2. Ventil nach Anspruch 1, **dadurch gekennzeichnet, dass** die Federmittel (44) von einer Fluidfeder, insbesondere eine Luftfeder, gebildet sind.

3. Ventil nach Anspruch 2, **dadurch gekennzeichnet, dass** die Federmittel (44) eine Federkammer (36) definieren, die von einer mit dem Steuerglied (17) bewegungsgekoppelten Beaufschlagungsfläche (A_{F}) begrenzt ist und die insbesondere mit der Speiseöffnung (P) in Fluidverbindung steht.

4. Ventil nach Anspruch 1, **dadurch gekennzeichnet, dass** die Federmittel (44) von einer mechanischen Federeinrichtung, insbesondere eine Druckfedereinrichtung (53), gebildet sind.

5. Ventil nach Anspruch 4, **gekennzeichnet durch** Einstellmittel zur variablen Einstellung der Vorspannung der Federmittel (44).

6. Ventil nach einem der Ansprüche 1 bis 5, **dadurch gekennzeichnet, dass** die Betätigungsmittel (37) zur fluidischen Erzeugung der Vorgabe-Stellkraft ausgebildet sind.

7. Ventil nach Anspruch 6, **dadurch gekennzeichnet, dass** die Betätigungsmittel (37) eine Betätigungskammer (35) definieren, die mit mindestens einem zur Zufuhr und Abfuhr eines Steuerfluides dienenden Betätigungskanal (38) kommuniziert und die von einer mit dem Steuerglied (17) bewegungsgekoppelten Betätigungsfläche (As) begrenzt ist.

8. Ventil nach Anspruch 7, **dadurch gekennzeichnet, dass** die Betätigungsmittel (37) eine Steuerventileinrichtung (39, 85) zur Beeinflussung des die Betätigungsfläche (Aₛ) beaufschlagenden Steuerdruckes aufweisen.

9. Ventil nach einem der Ansprüche 1 bis 8, **dadurch gekennzeichnet, dass** die jeweils paarweise miteinander zusammenwirkenden Verschlussabschnitte (67, 72) und Gegenabschnitte (68, 73) nach Art von Sitzventilmitteln ausgestaltet sind.

10. Ventil nach Anspruch 9, **dadurch gekennzeichnet, dass** der Verschlussabschnitt (67, 72) und der Gegenabschnitt (68, 73) wenigstens eines einem jeweiligen Verschlusselement (62, 63) zugeordneten Paares zusammenwirkender Verschluss- und Gegenabschnitte als in wenigstens einer Stellrichtung flexible Dichtlippe (86) ausgebildet ist.

11. Ventil nach einem der Ansprüche 1 bis 10, **dadurch gekennzeichnet, dass** die für die Einstellung der Druckdifferenz an der Stellvorrichtung (16) vorgesehenen, zur Beaufschlagung mit Fluid dienenden Flächen zumindest teilweise von Membranflächen und/oder von Kolbenflächen gebildet sind.

12. Ventil nach einem der Ansprüche 1 bis 11, **dadurch gekennzeichnet, dass** an dem Antriebsorgan (18) eine für die Vorgabe-Stellkraft verantwortliche Betätigungsfläche (A_{S}), eine dieser entgegengesetzte, für die fluidisch hervorgerufene Federkraft verantwortliche Beaufschlagungsfläche (A_{F}) sowie zwei für die Erzeugung der Arbeitsdruckkräfte verantwortliche, einander entgegengesetzte Steuerflächen (A_{A}, A_{B}) vorgesehen sind.

13. Ventil nach Anspruch 12, **dadurch gekennzeichnet, dass** die Betätigungsfläche (Aₛ) doppelt so groß ist wie die Beaufschlagungsfläche (A_{F}) und jede der Steuerflächen (A_{A}, A_{B}) .

14. Ventil nach einem der Ansprüche 1 bis 13, **dadurch gekennzeichnet, dass** das Steuerglied (17) im Betrieb des Ventils bei nicht anstehender Vorgabe-Stellkraft eine Grundstellung einnimmt, in der die Speiseöffnung (P), die Entlastungsöffnung (R) und die beiden Arbeitsöffnungen (A, B) fluidisch voneinander abgetrennt sind, wobei gleichzeitig zwischen den beiden Arbeitsöffnungen (A, B) eine Druckdifferenz anliegt.

15. Ventil nach einem der Ansprüche 1 bis 14, **dadurch gekennzeichnet, dass** die minimale Vorgabe-Stellkraft gleich null ist.

## Claims

1. Differential-pressure proportional valve, with a valve casing (2) which has a feed port (P), a vent port (R) and two operating ports (A, B), together with a setting device (16) for setting a desired pressure difference between the operating pressures prevailing at the two operating ports (A, B), wherein the setting device (16) has a movable control element (17) which is able, irrespective of its position, to connect one of the two operating ports (A, B) to either the feed port (P) or the vent port (R), wherein the operating pressures prevailing at the two operating ports (A, B) are connected to the movable control element (17), with actuating means (37) through which a specified setting force corresponding to the desired pressure difference may be imposed on the control element (17) in a first direction of setting (24), and with spring means (44) which constantly apply a spring force to the control element (17) in operation of the valve in a second direction of setting (25) opposite to the first direction of setting (24) in such a way that, with minimal specified setting force, a maximum operating pressure is provided at the one operating port (B) and a minimum operating pressure at the other operating port (A), wherein the control element (17) has a drive element (18) movable relative to the valve casing (2) in one or the other direction of setting (24, 25) according to the force ratios acting upon it, and on which there act on the one hand the specified setting force and the spring force, and on the other hand the first and second operating pressure forces resulting from the two operating pressures, each opposed to one another, **characterised in that** the control element (17) contains two closing elements (62, 63) movable independently of one another relative to the drive element (18) and to the valve casing (2) in the two directions of setting (24, 25), each assigned to one of the operating ports (A, B) and each having two closing sections (67, 72), of which the first closing section (67) by interaction with a first mating section (68) provided on the valve casing (2) controls the fluid flow between the assigned operating port (A, B) and the feed port (P), while the second closing section (72) controls the fluid flow between the assigned operating port (A, B) and the vent port (R) through interaction with a second mating section (73) provided on the drive element (18), wherein the closing elements (62, 63) are spring-loaded in opposite directions of setting (24, 25) and wherein the setting path of the closing elements (62, 63) is limited by the reaching of the closed position relative to the valve casing (2) which breaks the connection between one operating port (A, B) and the feed port (P).

2. Valve according to claim 1, **characterised in that** the spring means (44) are formed by a fluidic spring, in particular an air spring.

3. Valve according to claim 2, **characterised in that** the spring means (44) define a spring chamber (36) which is bounded by a pressure-loading surface (A_{F}) movement-coupled to the control element (17) and in particular in fluidic connection with the feed port (P).

4. Valve according to claim 1, **characterised in that** the spring means (44) are formed by a mechanical spring device , in particular a compression spring device (53).

5. Valve according to claim 4, **characterised by** setting means for variable setting of the preload of the spring means (44).

6. Valve according to any of claims 1 to 5, **characterised in that** the actuating means (37) are designed for fluidic generation of the specified setting force.

7. Valve according to claim 6, **characterised in that** the actuating means (37) define an actuating chamber (35) which communicates with at least one actuating passage (38) serving for the supply and removal of a control fluid, and which is bounded by an actuating surface (A_{S}) movement-coupled to the control element (17).

8. Valve according to claim 7, **characterised in that** the actuating means (37) have a control valve device (39, 85) for influencing the control pressure applied to the actuating surface (A_{S}).

9. Valve according to any of claims 1 to 8, **characterised in that** the closing sections (67, 72) and mating sections (68, 73) respectively interacting with one another in pairs are in the form of seated valve means.

10. Valve according to claim 9, **characterised in that** the closing section (67, 72) and the mating section (68, 73) of at least one pair of interacting closing and mating sections assigned to each closing element (62, 63) are in the form a sealing lip (86) which is flexible in at least one direction of setting.

11. Valve according to any of claims 1 to 10, **characterised in that** the surfaces provided for fluidic pressure application to set the pressure difference at the setting device (16) are formed at least partly by membrane surfaces and/or piston surfaces.

12. Valve according to any of claims 1 to 11 **characterised in that**, on the drive element (18) of an actuating surface (A_{S}) responsible for the specified setting force, there are provided an opposite pressure-loading surface (A_{F}) responsible for the spring force generated by fluidic means, and two opposing control surfaces (A_{A}, A_{B}) responsible for the generation of the operating pressure forces.

13. Valve according to claim 12, **characterised in that** the actuating surface (A_{S}) is twice the size of the pressure-loading surface (A_{F}) and each of the control surfaces (A_{A}, A_{B}).

14. Valve according to any of claims 1 to 13 **characterised in that** the control element (17), in operation of the valve with no specified setting force, assumes a basic position in which the feed port (P), the vent port (R) and the two operating ports (A, B) are fluidically separated from one another, and with a pressure difference simultaneously existing between the two operating ports (A, B).

15. Valve according to any of claims 1 to 14, **characterised in that** the minimum specified setting force is equal to zero.

## Revendications

1. Soupape proportionnelle à pression différentielle avec un boîtier de soupape (2) présentant une ouverture d'alimentation (P), une ouverture de décharge (R) et deux ouvertures de travail (A, B) ainsi qu'avec un dispositif de réglage (16) pour le réglage d'une différence de pression souhaitée entre les pressions de travail régnant sur les deux ouvertures de travail (A, B), le dispositif de réglage (16) présentant un organe de commande (17) mobile qui est en mesure en fonction de la position de relier les deux ouvertures de travail (A, B) respectivement à l'ouverture d'alimentation (P) ou à l'ouverture de décharge (R), les pressions de travail régnant au niveau des deux ouvertures de travail (A, B) étant affectées à l'organe de commande (17), avec des moyens d'actionnement (37), grâce auxquels une force de réglage prescrite correspondant à la différence de pression souhaitée peut être imposée à l'organe de commande (17) dans un premier sens de réglage (24), et avec des moyens à ressort (44) qui sollicitent en permanence l'organe de commande (17) lorsque la soupape est en service, dans un second sens de réglage (25) apposé au premier sens de réglage (24) avec une force de ressort de telle sorte qu'en cas de force de réglage prescrite minimale, une pression de travail maximale règne au niveau d'une ouverture de travail (B), et au niveau de l'autre ouverture de travail (A), une pression de travail minimale, l'organe de commande (17) présentant un organe d'entraînement (18) mobile dans l'un ou l'autre sens de réglage (24, 25) par rapport au boîtier de soupape (2) selon les rapports de force agissant sur celui-ci, sur lequel d'une part la force de réglage prescrite et la force de ressort et d'autre part des premières et des secondes forces de pression de travail résultant des deux pressions de travail agissent respectivement de manière opposée, **caractérisée en ce que** l'organe de commande (17) contient deux éléments de fermeture (62, 63) associés respectivement à l'une des ouvertures de travail (A, B), mobiles indépendamment l'un de l'autre par rapport à l'organe d'entraînement (18) et au boîtier de soupape (2) dans les deux sens de réglage (24, 25), qui présentent respectivement deux sections de fermeture (67, 72), parmi lesquelles la première section de fermeture (67) commande par coopération avec une première section antagoniste (68) prévue sur le boîtier de soupape (2) l'écoulement de fluide entre l'ouverture de travail (A, B) associée et l'ouverture d'alimentation (P) et la seconde section de fermeture (72) commande par coopération avec une seconde section antagoniste (73) prévue sur l'organe d'entraînement (18) l'écoulement de fluide entre l'ouverture de travail (A, B) associée et l'ouverture de décharge (R), les éléments de fermeture (62, 63) étant précontraints élastiquement dans des sens de réglage (24, 25) opposés et la course de réglage des éléments de fermeture (62, 63) étant limitée par l'atteinte de la position de fermeture interrompant la liaison entre une ouverture de travail (A, B) et l'ouverture d'alimentation (P) par rapport au boîtier de soupape (2).

2. Soupape selon la revendication 1, **caractérisée en ce que** les moyens à ressort (44) sont formés par un ressort à fluide, en particulier un ressort pneumatique.

3. Soupape selon la revendication 2, **caractérisée en ce que** les moyens à ressort (44) définissent une chambre élastique (36) qui est délimitée par une surface de sollicitation (_{A}F) couplée en mouvement avec l'organe de commande (17) et qui est en liaison fluidique en particulier avec l'ouverture d'alimentation (P).

4. Soupape selon la revendication 1, **caractérisée en ce que** les moyens à ressort (44) sont formés par un dispositif à ressort mécanique, en particulier un dispositif à ressort de compression (53).

5. Soupape selon la revendication 4, **caractérisée par** des moyens à réglage pour le réglage variable de la précontrainte des moyens à ressort (44).

6. Soupape selon l'une des revendications 1 à 5, **caractérisée en ce que** les moyens d'actionnement (37) sont conformés pour la génération fluidique de la force de réglage prescrite.

7. Soupape selon la revendication 6, **caractérisée en ce que** les moyens d'actionnement (37) définissent une chambre d'actionnement (35) qui communique avec au moins un canal d'actionnement (38) servant à amener et à évacuer un fluide de commande et qui est délimitée par une surface d'actionnement (A_{S}) couplée en mouvement avec l'organe de commande (17).

8. Soupape selon la revendication 7, **caractérisée en ce que** les moyens d'actionnement (37) présentent un dispositif de soupape de commande (39, 85) servant à influencer la pression de commande sollicitant la surface d'actionnement (A_{S}).

9. Soupape selon l'une des revendications 1 à 8, **caractérisée en ce que** les sections de fermeture (67, 72) et les sections antagonistes (68, 73) coopérant respectivement par paires les unes avec les autres sont configurées comme des moyens formant soupape à siège.

10. Soupape selon la revendication 9, **caractérisée en ce que** la section de fermeture (67, 72) et la section antagoniste (68, 73) au moins d'une paire associée à un élément de fermeture (62, 63) respectif de sections de fermeture et de sections antagonistes coopérantes sont réalisées comme une lèvre d'étanchéité (86) flexible dans au moins un sens de réglage.

11. Soupape selon l'une des revendications 1 à 10, **caractérisée en ce que** les surfaces servant à la sollicitation en fluide, prévues pour le réglage de la différence de pression sur le dispositif de réglage (16), sont formées au moins en partie par des surfaces de membrane et/ou des surfaces de piston.

12. Soupape selon l'une des revendications 1 à 11, **caractérisée en ce que** sur l'organe d'entraînement (18) sont prévues une surface d'actionnement (A_{S}) responsable de la force de réglage prescrite, une surface de sollicitation (A_{F}) responsable de la force de ressort suscitée fluidique, opposée à celle-ci ainsi que deux surfaces de commande (A_{A}, A_{B}) opposées, responsables de la génération des forces de pression de travail.

13. Soupape selon la revendication 12, **caractérisée en ce que** la surface d'actionnement (A_{S}) est deux fois plus grande que la surface de sollicitation (A_{F}) et que chacune des surfaces de commande (A_{A}, A_{B}).

14. Soupape selon l'une des revendications 1 à 13, **caractérisée en ce que** l'organe de commande (17) occupe lorsque la soupape est en service et que la force de réglage prescrite n'est pas présente, une position de base, dans laquelle l'ouverture d'alimentation (P), l'ouverture de décharge (R) et les deux ouvertures de travail (A, B) sont séparées fluidiquement les unes des autres, une différence de pression existant simultanément entre les deux ouvertures de travail (A, B).

15. Soupape selon l'une des revendications 1 à 14, **caractérisée en ce que** la force de réglage prescrite minimale est égale à zéro.
